(19) **Europäisches Patentamt**
**European Patent Office**
**Office européen des brevets**

(11) **EP 1 787 849 B1**

(12) **EUROPEAN PATENT SPECIFICATION**

(45) Date of publication and mention
of the grant of the patent:
**04.03.2009 Bulletin 2009/10**

(51) Int Cl.:
*B60K 35/00* *(2006.01)* *G01C 21/26* *(2006.01)*
*B60T 7/22* *(2006.01)* *G08G 1/16* *(2006.01)*

(21) Application number: **06124378.8**

(22) Date of filing: **20.11.2006**

(54) **Driving assist method and driving assist apparatus for vehicle**

Fahrhilfeverfahren und Fahrhilfevorrichtung für ein Kraftfahrzeug

Procédé d'assistance à la conduite et appareil d'assistance à la conduite pour véhicule

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.11.2005 JP 2005337680**

(43) Date of publication of application:
**23.05.2007 Bulletin 2007/21**

(73) Proprietor: **Aisin AW Co., Ltd.**
**Fujii-cho**
**Anjo-shi,**
**Aichi 444-1192 (JP)**

(72) Inventors:
• **Yamamoto, Yukio c/o AISIN AW CO., Ltd.**
**Aichi 444-8564 (JP)**
• **Shibata, Yumi c/o AISIN AW CO., Ltd.**
**Aichi 444-8564 (JP)**
• **Maruyama, Katsuya c/o AISIN AW CO., Ltd.**
**Aichi 444-8564 (JP)**

(74) Representative: **Vossius & Partner**
**Siebertstrasse 4**
**81675 München (DE)**

(56) References cited:
**EP-A1- 1 146 497** **WO-A-02/08010**
**DE-A1- 19 800 202** **DE-C1- 19 940 718**
**FR-A1- 2 842 337** **GB-A- 2 224 475**

**Description**

The present invention relates to a driving assist method and a driving assist apparatus for a vehicle.

WO 02/08010 relates to an automatic brake and steering system for a vehicle comprising a sensor device for detesting the vehicle's state variables. A regulating and control device are provided for adjusting the brakes and/or the steering of the vehicle. An alternative route is determined as an avoidance strategy when an obstacle lies in the travel path of the vehicle. Further, a graphic display is provided - on which the actual position of the vehicle and the setpoint which has been determined in accordance with the avoidance strategy are shown.

FR 2 842 337 relates to a device for aiding the driving of an aircraft running over the ground in acceleration phase. The speed of the aircraft and a value corresponding to a deceleration of the aircraft during a possible emergency braking are determined. Further, the distance to be travelled on the ground by the aircraft while stopping is calculated and a stopping position can be calculated on the basis of this distance and the current position of the aircraft. These values are presented in the form of symbols to the pilot for example by audible or tactile means or by a head-up display on the windscreen of the vehicle.

A driving assist apparatus for assisting a driving operation is well known. The driving assist apparatus, for example, described in JP-A-2002-163795, estimates a braking distance of a vehicle and gives obstacle information and driving guidance to a driver to avoid crashing against an obstacle ahead. The driving assist apparatus also detects an obstacle ahead, calculates the distance to the obstacle as well as the braking distance of the vehicle, and alerts the driver to a potential crash.

However, the conventional apparatus described above simply informs the driver the existence of the obstacle and the driver brakes the vehicle, so that the driver cannot predict the actual stop position of the vehicle. As a result, the driver has to brake the vehicle using his/her common sense in consideration of brake force and deceleration of the vehicle.

Accordingly, it is an object for the present invention to provide a driving assist apparatus and a driving assist method for displaying a position which a vehicle speed becomes a predetermined speed according to a deceleration of the vehicle on a display device and allowing a driver to quickly perform a next driving operation.

To solve the problems described above, various exemplary implementations of the principles described herein provide a driving assist apparatus for a vehicle, comprising final position calculating device for calculating a position at which a vehicle speed becomes a predetermined speed on the basis of a vehicle position and a deceleration of a vehicle and display control device for displaying an arrival indicator indicating the position calculated by the final position calculating device on a road map displayed by display device. Therefore, for example, the driver may visually check a position at which the vehicle speed becomes the predetermined speed according to deceleration, so that the driver may quickly perform a next driving operation.

Various exemplary implementations of the principles described herein provide a driving assist apparatus for a vehicle, wherein the final position calculating device calculates a position at which the vehicle speed becomes the predetermined speed at least when a brake operation is performed. Therefore, the driver may quickly perform a next driving operation.

Various exemplary implementations of the principles described herein provide the driving assist apparatus for the vehicle, wherein the final position calculating device calculates a position at which the vehicle stops. Therefore, when the vehicle slows down, a stop position of the vehicle is displayed on the road map on the display device.

Various exemplary implementations of the principles described herein provide the driving assist apparatus for the vehicle, wherein the final position calculating device calculates each position at which the vehicle speed becomes each of a plurality of predetermined speeds, and the display control device individually displays arrival indicators indicating the plurality of positions calculated by the final position calculating device on the road map displayed by the display device.

Various exemplary implementations of the principles described herein provide the driving assist apparatus for the vehicle, comprising object position calculating device for calculating the position of an object located in front of the vehicle, wherein the display control device displays an object indicator indicating the position of the object calculated by the object position calculating device together with the arrival indicator indicating the final position on the display device. Therefore, the driver may visually check the relation between an arrival indicator and the object indicator and quickly perform a next driving operation.

Various exemplary implementations of the principles described herein provide a driving assist apparatus, comprising object position calculating device for calculating the position of an object located in front of a vehicle, and converting device for converting the position calculated by final position calculating device to a value on the basis of the object position calculated by the object position calculating device, wherein the display control device for displaying the value converted by the converting device as the arrival indicator by display device. The position at which the vehicle speeds becomes the predetermined speed is converted to an arrival indicator indicating the value based on the position of the object and displayed on the display means, so that the driver may visually check how far the position at which the vehicle speed becomes the predetermined speed is from the position of the object. Therefore, the driver may quickly perform a next driving operation.

Various exemplary implementations of the principles described herein provide the driving assist method, comprising the steps of calculating a position at which a vehicle speed becomes a predetermined speed on the basis of a deceleration and displaying the position as an arrival indicator on a road map by display device. Therefore, for example, the driver may observe the position at which the vehicle speed becomes the predetermined speed when the driver brakes the vehicle with his/her own eyes, so that the driver may quickly perform a next driving operation.

The invention will be further described with reference to the drawings:

> FIG. 1 is a block diagram of a driving assist apparatus according to the present invention.
> FIG. 2 is a diagram showing a front detection radar device.
> FIG. 3 is a diagram showing a driving assist image for braking.
> FIG. 4 is a diagram showing a driving assist image for braking.
> FIG. 5 is a flowchart showing operations by the driving assist apparatus.
> FIG. 6 is a diagram showing another driving assist image for braking.
> FIG. 7 is a diagram showing another driving assist image for braking.
> FIG. 8 is a diagram showing another driving assist image for braking.
> FIG. 9 is a diagram showing another driving assist image for braking.
> FIG. 10 is a diagram showing another driving assist image for braking.
> FIG. 11 is a diagram showing another driving assist image for braking.

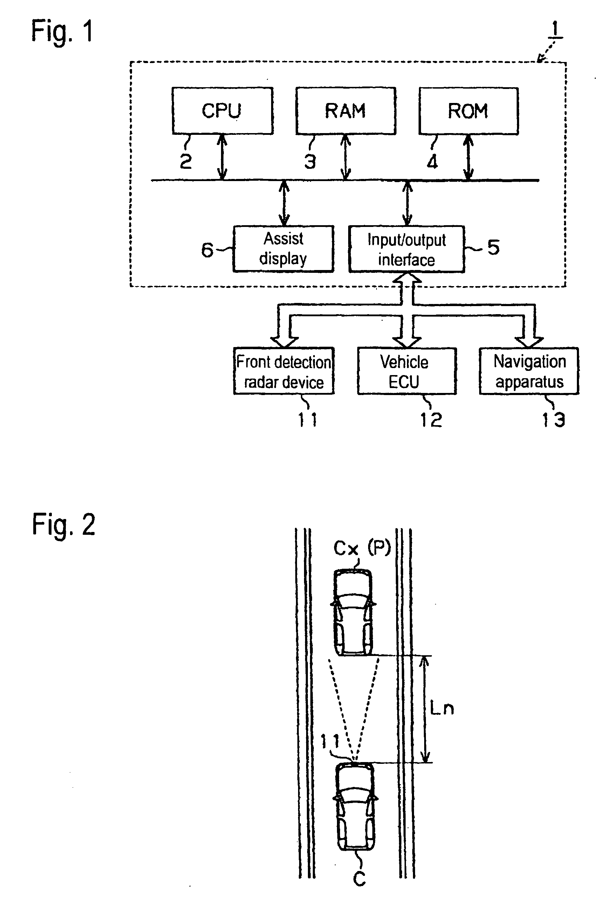

An embodiment of the present invention is described with reference to FIGs. 1 to 5 below.

FIG. 1 is a block diagram showing a structure of a driving assist apparatus mounted on a vehicle. The driving assist apparatus 1 in FIG. 1 includes vehicle position detecting means, brake operation detecting means, object position calculating means, final position calculating means, a CPU 2 as display control means, an RAM 3 temporarily storing a decision by the CPU 2, an ROM 4 storing various driving assist programs such as a driving assist program for braking, an input/output interface 5, and an assist display 6.

The CPU 2 connects to a front detection radar device 11 through the input/output interface 5. In the present embodiment, the front detection radar device 11 is a millimeter wave radar. As shown in FIG. 2, the front detection radar device 11 is mounted on a front grille of a vehicle C, emits a millimeter wave forward, receives the reflected wave, detects a vehicle Cx ahead and/or an object P such as a falling object, and calculates the distance Ln to the object P and the relative speed of the object. The CPU 2 requests and obtains the distance Ln and the relative speed of the object P calculated by the front detection radar device 11 at different times.

The CPU 2 is connected to a vehicle electronic control device (vehicle ECU) 12 through the input/output interface 5. The vehicle ECU 12 is a device for controlling a drive system of the vehicle C and inputs signals from various kinds of sensors such as an ignition switch, a steering sensor, a speed sensor, an accelerator operation sensor, and a brake operation sensor. The vehicle ECU 12 calculates a vehicle speed Vn, an accelerator opening degree, a steering angle, and a braking level $\theta n$ of the vehicle C at different times on the basis of the signals from the sensors described above. Then the CPU 2 requests and obtains the vehicle speed Vn, the braking level $\theta n$, and on/off signals of the ignition switch at different times from the vehicle ECU 12.

The CPU 2 connects to a navigation apparatus 13 through the input/output interface 5. The navigation apparatus 13 calculates the position DP of the vehicle C and displays the position DP with a map on a display (not shown) in the navigation apparatus 13 and/or searches a route to a destination and displays the searched route on the map to guide a driver. Then the CPU 2 requests and obtains information of the vehicle position DP of the vehicle C which is calculated by the navigation apparatus 13 at any given time and/or a route and map data stored in the navigation apparatus 13. The CPU 2 also requires and obtains feature information located in front of the vehicle C (for example, coordinates of an intersection, coordinates of a stop sign, coordinates of a crosswalk, and coordinates of a road corner) from route data and/or road data in the navigation apparatus 13. On the basis of the information from the navigation apparatus 13, the CPU 2 detects the object P (a feature such as an intersection, a stop sign, a crosswalk, or a road corner) located in front of the vehicle C.

The CPU 2 determines whether the object P detected on the basis of information from the navigation apparatus 13 and the front detection radar device 11 has some impact on driving operation at a certain time. In the present embodiment, the object P which is located closest to the vehicle C within a predetermined distance Lk is termed a specified object Px.

After determining the specified object Px, when a brake operation is performed while driving, the CPU 2 next determines whether "the driving assist mode for braking" should be selected on the basis of the speed Vn, the distance Ln to the specified object Px, and the presence or absence of brake pedal operation. That is, the CPU 2 determines whether a guide for driving assist is necessary for the driver. In the present embodiment, it is determined that the guide for driving assist is not necessary for the driver when there is no need for driving assist even though a brake operation is performed or when a brake operation enables the vehicle to stop immediately. More specifically, when there is no specified object Px ahead or when the vehicle C is traveling at the speed Vn which is slow enough for the driver to stop the vehicle immediately, it is determined that the guide for driving assist is not necessary for the driver.

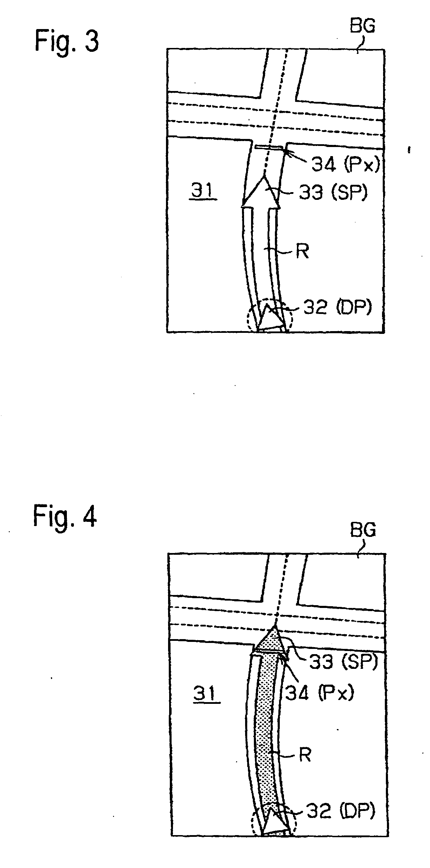

The CPU 2 is connected to an assist display 6 as display means. The assist display 6 is a full-color LCD display device. When the CPU 2 is in a "driving assist mode for braking", the CPU 2 displays a driving assist image for braking BG as shown in FIGs. 3 and 4. The driving assist image for braking BG is an image displaying a stop position SP as a final position of the vehicle C according to deceleration when the vehicle brakes for parking. The driving assist image includes a route R to the stop position SP of the vehicle C, a vehicle position indicator 32 indicating the current vehicle C, a stop position indicator 33 indicating a stop position SP, and an object indicator 34 indicating the position of the specified object Px on a map 31.

The CPU 2 displays the route R to the stop position SP of the vehicle C in different colors according to the stop position SP which will be located at a distance from the vehicle C that is less than the distance from the vehicle C to the specified object Px or will be located at a distance from the vehicle C that is equal to or greater than the distance from the vehicle C to the specified object Px. More specifically, as shown in FIG. 3, when the stop position SP will be located at a distance from the vehicle C that is less than the distance from the vehicle C to the specified object Px, the route R from the vehicle position indicator 32 to the stop position indicator 33 is displayed in blue. When the stop position SP will be located at a distance from the vehicle C that is equal to or greater than the distance from the vehicle C to the specified object Px as shown in FIG. 4, the route R from the vehicle position indicator 32 to the stop position indicator 33 is displayed in red.

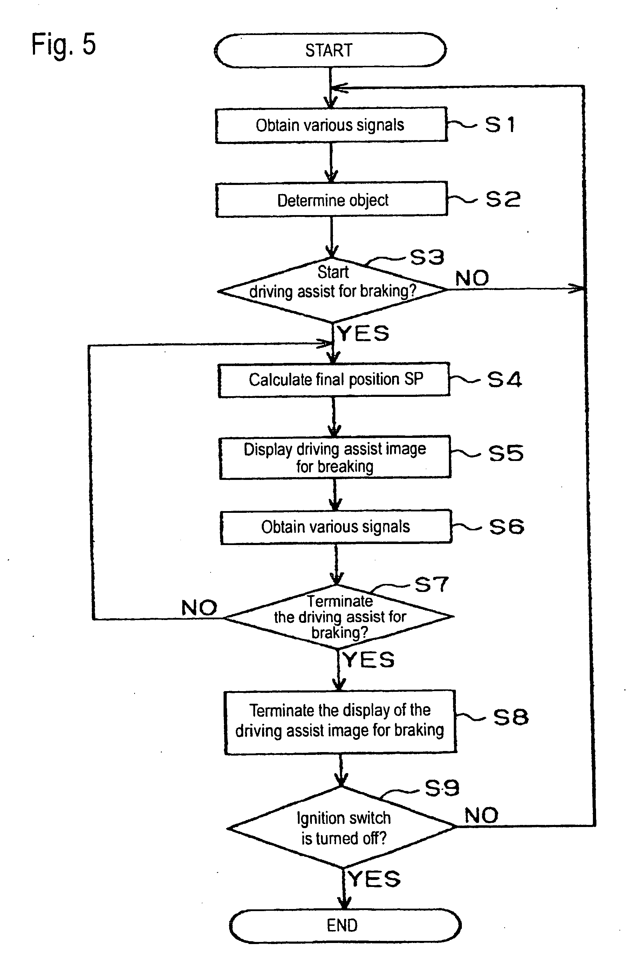

Next, the operation of the driving assist apparatus 1 in the current embodiment will be described with reference to the procedure of the CPU 2 in FIG. 5 below. When the driving assist apparatus 1 is activated upon receiving an on-signal from the ignition switch, the CPU 2 obtains various signals and information from the front detection radar device 11, the vehicle ECU 12, and the navigation apparatus 13 (Step S1). The CPU 2 obtains the distance Ln to the object P and the relative speed of the object P from the front detection radar device 11. The CPU 2 obtains the vehicle speed Vn of the vehicle C from the vehicle ECU 12 and further obtains the operation of the brake pedal θn. The CPU 2 further obtains the position DP of the vehicle C from the navigation apparatus 13.

Note that, the navigation apparatus 13 at this point displays a road guide image within the public domain including a road map and an indicator indicating the vehicle position DP on the basis of the vehicle position DP on a display in the navigation apparatus 13. However, there is no image on the assist display 6 at this point.

Next, the CPU 2 specifies an object (Step S2). The CPU 2 detects an object P (feature) that is a predetermined distance ahead of the vehicle C such as a stop line, an intersection, or a start point of a curve, on the basis of the calculated vehicle position DP and map data. When the object P is detected, the CPU 2 calculates the distance Ln from the vehicle position DP to the object P. In the present embodiment, the CPU 2 selects one object P which has the shortest distance Ln from the vehicle position DP (that is, the object P is the closest to the vehicle C) from among a plurality of objects P determined as described above as well as objects P detected by the front detection radar device 11, and determines the object P as the specified object Px. Then the CPU 2 temporarily stores the distance Ln from the vehicle position DP to the specified object Px as a specified object distance in the RAM 3.

Next, the CPU 2 determines whether "the driving assist mode for braking" should be executed or not (Step S3). The CPU 2 determines whether "the driving assist mode for braking" should be executed on the basis of the braking level θn, the vehicle speed Vn, and the specified object distance Ln at a given time. In the present embodiment, the CPU 2 chooses the "driving assist mode for braking", provided that the vehicle speed Vn is equal to or greater than a predetermined speed Vk (for example, 5 kilometers per hour), that the object distance Ln is equal to or less than a predetermined distance Lk (for example, 200 meters), and that the braking level θn is greater than a predetermined value θk (=0) (that is when the braking operation is executed). The CPU 2 does not select the "driving assist mode for braking" under any other conditions.

When the "driving assist mode for braking" is not selected (Step S3=NO), the procedure returns to Step S1 and the CPU 2 obtains new signals and information from the vehicle ECU 12 and the navigation apparatus 13, and updates the vehicle position DP, the vehicle speed Vn, the braking level θn, the specified object distance Ln, and so on.

When the "driving assist mode for braking" is selected (Step S3=YES), the CPU 2 calculates the stop position SP at which the vehicle C stops after braking, that is, the position at which the vehicle speed Vn becomes 0 (Step S4). More specifically, when the brake operation is performed, the CPU 2 calculates a deceleration per unit time "a" using the following equation (1).

$$a = (Vb - Va) / (tb - ta) \quad ...(1)$$

Vb is the vehicle speed at a time tb. Va is the vehicle speed at a time ta(ta is before tb).

The CPU 2 calculates "n " number of consecutive decelerations "a" per unit time (a1, a2, ..., an), and calculates "n" number of moving average decelerations Aav using the following equation (2).

$$Aav=(a1+a2+...+an)/n \quad ...(2)$$

After calculating the moving average deceleration Aav, the CPU 2 calculates a braking distance Sa using the following equation (3).

$$Sa=(Ve^2-V0^2)/(2Aav) \quad ...(3)$$

V0 is an initial braking speed. In the present embodiment, V0 is the vehicle speed Vn when the "driving assist mode for braking" is selected. Ve is a closing speed. In the present embodiment, Ve is the vehicle speed Vn (=0) when the vehicle C stops, so that Ve is "0".

After calculating the braking distance Sa, the CPU 2 next calculates the stop position SP of the vehicle C. The stop position SP of the vehicle C may be determined by using the vehicle position DP at a given time and map data. The CPU 2 temporarily stores the determined stop position SP in the RAM 3.

After calculating the stop position SP, the CPU 2 displays the map 31 including the route R to the stop position SP of the vehicle C on the assist display 6. The CPU 2 further overlaps the driving assist image for braking BG with the vehicle position indicator 32 indicating the current vehicle C and the stop position indicator 33 indicating the stop position SP on the map 31 (Step S5). At this time, the CPU 2 reads out the specified object distance Ln stored in the RAM 3 and finds the position of the specified object Px. Then the CPU 2 displays the object indicator 34 indicating the position of the specified object Px on the map 31 of the assist display 6.

When the stop position SP will be located at a distance from the vehicle C that is less than the distance from the vehicle C to the specified object Px, the CPU 2 displays the route R from the vehicle position indicator 32 to the stop position indicator 33 in blue as shown in FIG. 3. When the stop position SP will be located at a distance from the vehicle C that is equal to or greater than the distance from the vehicle C to the specified object Px, the CPU 2 displays the route R from the vehicle position indicator 32 to the stop position indicator 33 in red as shown in FIG. 4.

Therefore, the driver may verify the stop position SP by visually checking the stop position indicator 33 on the map 31 of the assist display 6. Further, because the object indicator 34 is displayed, the driver may recognize the relative position between the stop position indicator 33 and the object indicator 34, so that the driver may visually check whether the vehicle C will overrun the specified object Px or stop before hitting the specified object Px with brake operation.

Subsequently, the CPU 2 obtains new signals and information from the front detection radar device 11, the vehicle ECU 12, and the navigation apparatus 13 (Step S6) and determines whether the "driving assist mode for braking" should be terminated (Step S7). The CPU 2 updates the braking level θn, the vehicle speed Vn, and the specified object distance Ln and determines whether the "driving assist mode for braking" should be continued or not on the basis of the updated braking level θn, the vehicle speed Vn, and the specified object distance Ln. In the present embodiment, the CPU 2 chooses the "driving assist mode for braking", provided that the vehicle speed Vn is equal to or greater than a predetermined vehicle speed Vk, that the object distance Ln is equal to or less than a predetermined distance Lk, and that the braking level θn is greater than a predetermined value θn (=0) (when the brake operation is performed). The CPU 2 does not choose "the driving assist mode for braking" other than that.

During braking (Step S7=NO), the procedure returns to Step S4 and the CPU 2 updates the stop position SP and displays the new driving assist image for braking BG on the assist display 6 on the basis of the stop position SP (Step S5). That is, the CPU 2 displays the vehicle position indicator 32 and the stop position SP of the vehicle C changing with the brake operation on the assist display 6 to allow the driver to check them.

The "driving assist mode for braking" is terminated when the brake operation is terminated (Step S7=YES). The CPU 2 terminates the display of the driving assist image for braking BG (Step S8) and determines whether an on/off signal from the ignition switch is off (Step S9). When the on/off signal from the ignition switch is on (Step S9=NO), the procedure returns to Step S1 and the CPU 2 restarts a new driving assist operation.

When the on/off signal from the ignition switch is off (Step S9=YES), the CPU 2 determines that the driving operation is terminated and terminates the procedure of the driving assist operation for braking.

According to the embodiment as described above, the user may obtain the following advantages. 1) According to the present embodiment, when the brake operation is performed, the driving assist apparatus 1 calculates the braking distance Sa on the basis of the deceleration (average deceleration Aav) of the vehicle C and calculates the stop position SP of the vehicle C on the basis of the braking distance Sa. The driving assist apparatus 1 then activates the assist display 6 and displays the map 31 including the route R to the stop position SP of the vehicle C on the assist display 6. At this time, the driving assist apparatus 1 overlaps the stop position indicator 33 indicating the stop position SP on the map 31. Therefore, the driver may visually check the stop position SP depending on the deceleration on the assist display 6, so that the driver may quickly perform a next driving operation.

2) According to the present embodiment, the vehicle position indicator 32 and the object indicator 34 are displayed together on the assist display 6, so that the driver may visually check the relative position between the stop position indicator 33 and the object indicator 34 and the relative position between the vehicle position indicator 32 and the object indicator 34. Therefore, the driver may quickly perform a next driving operation.

3) According to the present embodiment, the driving assist image for braking BG is displayed on the assist display 6 for oneself. Therefore, it may be easier and quicker for the driver to verify the image on the exclusive display device than on a display device for other images. As a result, in a situation which requires quick decisions to the driver, the driver may quickly perform appropriate operations.

4) According to the present embodiment, the display method of the driving assist image for braking BG is different when the stop position SP is in front of the specified object Px than when the stop position SP overruns the specified object Px. That is, when the stop position SP is in front of the specified object Px, the route R from the vehicle position indicator 32 to the stop position indicator 33 is displayed in blue. When the stop position SP overruns the specified object Px, the route R from the vehicle position indicator 32 to the stop position indicator 33 is displayed in red. Therefore, the driver may visually check and feel the current situation, so that the driver may quickly perform a next driving operation.

5) According to the present embodiment, the "driving assist mode for braking" is selected, provided that the vehicle speed Vn is equal to or greater than a predetermined speed Vk, that the object distance Ln is equal to or less than a predetermined distance Lk, and that the braking operation is performed. That is, it is determined that the driving assist image for braking BG is not displayed on the assist display 6 when there is no need for driving assist even though a brake operation is performed or when a brake operation enables the vehicle to stop immediately. More specifically, when there is no specified object Px ahead or when the vehicle C is traveling at the speed Vn which is slow enough to stop immediately, the driving assist image for braking BG is not displayed. Therefore, the driving assist image for braking BG is not displayed unless it is needed even if a brake operation is performed.

Note that, the present embodiment described above may be modified as follows. In the present embodiment, the driving assist image for braking BG is displayed on an exclusive display, that is, the assist display 6. However, for example, the driving assist image for braking BG may be displayed in a display of the navigation apparatus 13 or in a display mounted in a driver's space for other images.

In the present embodiment, the "driving assist mode for braking" is selected, provided that the vehicle speed Vn is equal to or greater than a predetermined speed Vk, that the object distance Ln is equal to or less than a predetermined distance Lk, and that the braking operation is performed. However, the "driving assist mode for braking" may be selected when the braking operation is performed regardless of other conditions. The braking operation may be not only an operation of a brake pedal, but an operation to change transmission gear ratio such as downshifting for an engine braking.

In the present embodiment, the braking operation is one of the conditions for selecting the "driving assist mode for braking". However, a true necessary condition for selecting "the driving assist mode for braking" is simply when the vehicle slows down. For example, decelerations of the vehicle C at any given time may be calculated, and "the driving assist mode for braking" may be displayed at the timing when one of the calculated decelerations becomes greater than a predetermined deceleration.

In the present embodiment, after the "driving assist mode for braking" is selected and "n" number of decelerations "a" (a1, a2, ..., an) are continuously founded, the moving average deceleration Aav is calculated. However, "n" number of decelerations (a1, a2, ..., an) may be always updated regardless of the driving assist mode for braking. Then the moving average deceleration Aav may be calculated right after the driving assist mode for braking is selected. Further, the moving average deceleration Aav may be always calculated and the braking distance Sa may be calculated right after the driving assist mode for braking is selected. Further, the braking distance Sa may be calculated based on not the moving average deceleration Aav but one of the decelerations a.

In the present embodiment, the driving assist apparatus 1 (the CPU 2) calculates the deceleration "a" or the moving average deceleration Aav. However, the vehicle ECU 12 may calculate the deceleration "a" or the moving average deceleration Aav. In this time, the CPU 2 may obtain the deceleration "a" or the moving average deceleration Aav calculated by the vehicle ECU 12 and calculate the braking distance Sa on the basis of the obtained deceleration "a" or the moving average deceleration Aav.

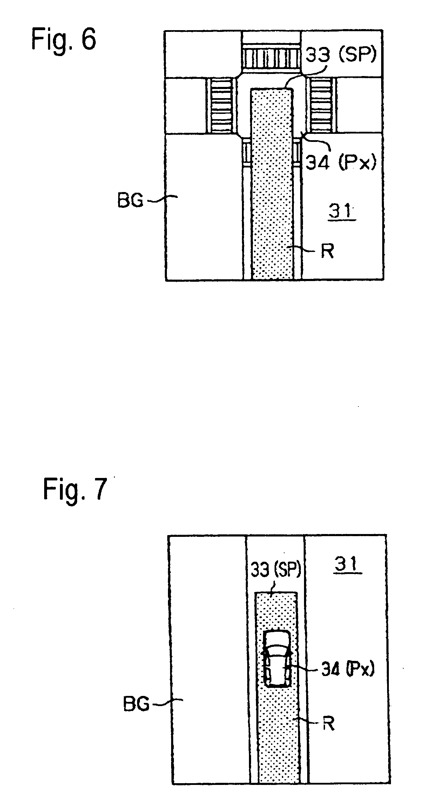

In the present embodiment, as the driving assist image BG, the route R and the vehicle position indicator 32 are overlapped on the map 31 showing a real road shape which the vehicle is currently traveling and displayed on the assist display 16 as shown in FIGs. 3 and 4. However, the real road shape on the map 31 may be simplified and displayed by straight lines as shown in FIGs. 6 and 7, and the route R, the vehicle position indicator 32, and the object indicator 34 may be displayed on the map 31.

In the present embodiment, the stop position indicator 33 displayed on the driving assist image for braking BG indicates the stop position SP of the vehicle C. However, a position which the speed of the vehicle C becomes a predetermined speed, for example, 5 kilometers per hour, 10 kilometers per hour, and so on, may be displayed as a final position indicator.

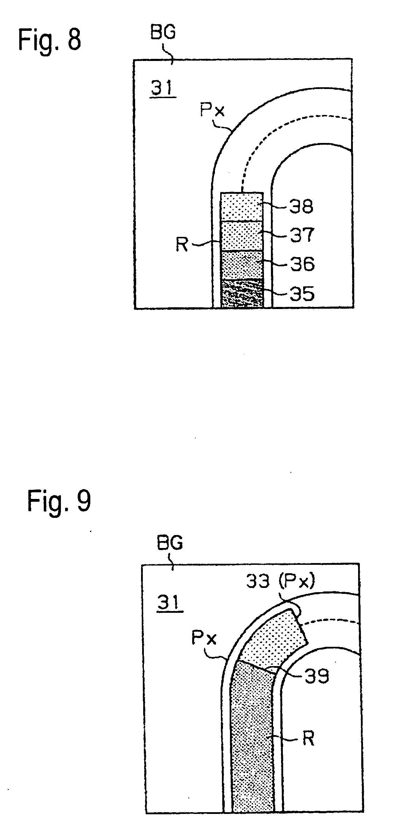

Further, as shown in FIG. 8, a plurality of predetermined position which the speed of the vehicle C becomes a predetermined speed (final positions), for example, 15 kilometers per hour, 10 kilometers per hour, 5 kilometers per hour, and 0 kilometers per hour, may be displayed as the final position indicators 35, 36, 37, and 38 to be determined each other. Further, the driving assist image for braking BG in FIG. 9 shows an entrance of a curve as the specified object Px and the arrival indicator 39 indicating a position which the speed of the vehicle C becomes a predetermined speed (final position) is displayed. Therefore, the driver may visually check how slow the vehicle speed Vn should become at the entrance of the curve.

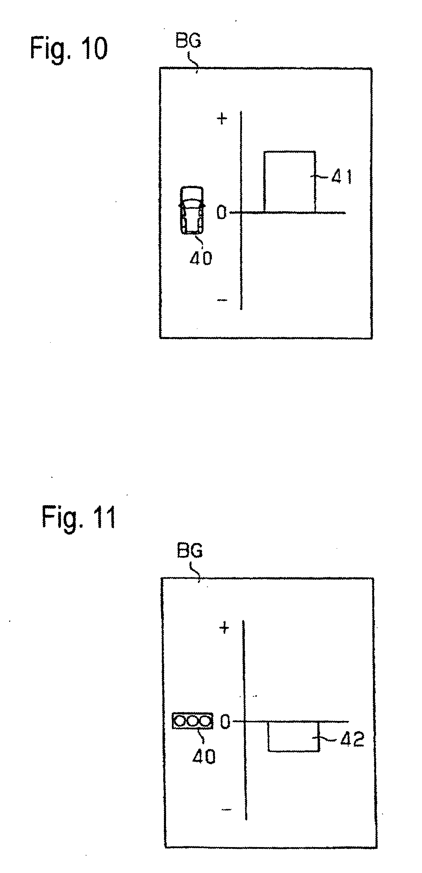

In the present embodiment, the driving assist image for braking BG is displayed the map 31 including the route R to the stop position SP of the vehicle C, and the stop position indicator 33 indicating the stop position SP is overlapped on the map 31. However, as shown in FIGs. 10 and 11, the CPU 2 may have a data conversion feature to calculate the distance how far the stop position SP is in front of or overruns the position of the specified object Px, so that such distances may be displayed as an indicator 41 or 42 on the driving assist image for braking BG on the assist display 6. In this case, the CPU 2 may compare the distance Ln to the specified object Px and the braking distance Sa. When the braking distance Sa is longer than the distance Ln, the indicator 41 indicating the difference (=Sa-Ln) may be displayed on the upper of the display on the basis of the object indicator 40 as shown in FIG. 10. When the braking distance Sa is shorter than the distance Ln, the indicator 42 indicating the difference (=Ln-Sa) may be displayed on the bottom of the display on the basis of the object indicator 40 as shown in FIG. 11, so that the driver may visually check and feel how far the stop position is from the object indicator 40.

## Claims

1. A driving assist apparatus (1), comprising:

   final position calculating means (2) for calculating a position at which a vehicle speed becomes a predetermined speed on the basis of a vehicle position and a deceleration of a vehicle; and
   display control means (2) for displaying an arrival indicator indicating the position calculated by the final position calculating means on a road map displayed by display means (6).

2. The driving assist apparatus according to Claim 1, wherein:

   the final position calculating means calculates a position at which the vehicle speed becomes the predetermined speed at least when a brake operation is performed.

3. The driving assist apparatus according to Claim 1 or 2, wherein:

   the final position calculating means calculates a position at which the vehicle stops.

4. The driving assist apparatus according to Claim 1, 2 or 3, wherein:

   the final position calculating means calculates each position at which the vehicle speed becomes each of a plurality of predetermined speeds; and
   the display control means individually displays arrival indicators indicating the plurality of positions calculated by the final position calculating means on the road map displayed by the display means.

5. The driving assist apparatus according to any one of Claims 1 through 4, comprising:

   object position calculating means (2) for calculating the position of an object located in front of the vehicle,

   wherein the display control means displays an object indicator indicating the position of the object calculated by the object position calculating means together with the arrival indicator indicating the final position on the display means.

6. The driving assist apparatus according to any one of Claims 1 through 5, comprising:

   object position calculating means (2) for calculating the position of an object located in front of a vehicle; and
   converting means (2) for converting the position calculated by final position calculating means to a value on the basis of the object position calculated by the object position calculating means,

   wherein the display control means is adapted to display the value converted by the converting means as the arrival indicator by display means.

7. A driving assist method for a vehicle, comprising the steps of:

   calculating a position at which a vehicle speed becomes a predetermined speed on the basis of a deceleration; and
   displaying the position as an arrival indicator on a road map by display means (6).

## Patentansprüche

1. Fahrhilfevorrichtung (1) mit:

einer Endpositionsberechnungseinrichtung (2) zum Berechnen einer Position, bei der eine Fahrzeuggeschwindigkeit auf der Basis einer Fahrzeugposition und einer Verzögerung eines Fahrzeugs eine vorbestimmte Geschwindigkeit erreicht; und

einer Bildschirmsteuereinrichtung (2) zum Anzeigen eines Ankunftsindikators, der die durch die Endpositionsberechnungseinrichtung berechnete Position auf einer auf einem Bildschirm (6) dargestellten Straßenkarte anzeigt.

**2.** Fahrhilfevornchtung nach Anspruch 1, wobei die Endpositionsberechnungseinrichtung eine Position berechnet, bei der die Fahrzeuggeschwindigkeit die vorbestimmte Geschwindigkeit zumindest beim Ausführen einer Bremsbetätigung erreicht.

**3.** Fahrhilfevornchtung nach Anspruch 1 oder 2, wobei die Endpositionsberechnungseinrichtung eine Position berechnet, bei der das Fahrzeug anhält.

**4.** Fahrhilfevorrichtung nach Anspruch 1, 2 oder 3, wobei:

die Endpositionsberechnungseinrichtung jede Position berechnet, bei der die Fahrzeuggeschwindigkeit jede der mehreren vorbestimmten Geschwindigkeiten erreicht; und

die Bildschirmsteuereinrichtung Ankunftsindikatoren, die die durch die Endpositionsberechnungseinrichtung berechneten mehreren Positionen anzeigen, auf der auf dem Bildschirm dargestellten Straßenkarte einzeln darstellt.

**5.** Fahrhilfevorrichtung nach einem der Ansprüche 1 bis 4, mit einer Objektpositionsberechnungseinrichtung (2) zum Berechnen der Position eines sich vor dem Fahrzeug befindenden Objekts, wobei die Bildschirmsteuereinrichtung einen Objektindikator, der die durch die Objektpositionsberechnungseinrichtung berechnete Position des Objekts anzeigt, zusammen mit dem Ankunftsindikator, der die endgültige Position anzeigt, auf dem Bildschirm darstellt.

**6.** Fahrhilfevorrichtung nach einem der Ansprüche 1 bis 5, mit:

einer Objektpositionsberechnungseinrichtung (2) zum Berechnen der Position eines sich vor einem Fahrzeug befindenden Objekts; und

einer Konvertierungseinrichtung (2) zum Konvertieren der Position, die durch die Endpositionsberechnungseinrichtung berechnet wurde, in einen Wert auf der Basis der Objektposition, die durch die Objektpositionsberechnungseinrichtung berechnet wurde,

wobei die Bildschirmsteuereinrichtung den durch die Konvertierungseinrichtung konvertierten Wert als Ankunftsindikator auf dem Bildschirm anzeigt.

**7.** Fahrhilfeverfahren für ein Fahrzeug, mit den Schritten:

Berechnen einer Position, bei der eine Fahrzeuggeschwindigkeit eine vorbestimmte Geschwindigkeit erreicht, auf der Basis einer Verzögerung; und

Anzeigen der Position als ein Ankunftsindikator auf einer Straßenkarte auf einem Bildschirm (6).

**Revendications**

**1.** Dispositif d'assistance à la conduite (1), comportant :

un moyen de calcul de position finale (2) pour calculer une position à laquelle une vitesse de véhicule devient une vitesse prédéterminée en fonction de la position du véhicule et du ralentissement du véhicule ; et

un moyen de contrôle d'affichage (2) pour afficher un indicateur d'arrivée indiquant la position calculée par le moyen de calcul de position finale sur une carte routière affichée par le moyen d'affichage (6).

**2.** Dispositif d'assistance à la conduite selon la revendication 1, dans lequel :

le moyen de calcul de position finale calcule une position à laquelle la vitesse de véhicule devient la vitesse prédéterminée au moins lorsqu'un freinage est effectué.

**3.** Dispositif d'assistance à la conduite selon la revendication 1 ou 2, dans lequel :

le moyen dé calcul de position finale calcule une position à laquelle le véhicule s'arrête.

**4.** Dispositif d'assistance à la conduite selon la revendication 1, 2 ou 3, dans lequel :

le moyen de calcul de position finale calcule chaque position à laquelle la vitesse de véhicule devient chacune d'une pluralité de vitesses prédéterminées ; et

le moyen de contrôle d'affichage affiche individuellement les indicateurs d'arrivée indiquant la pluralité de positions calculées par le moyen de calcul de position finale sur la carte routière affichée par le moyen d'affichage.

**5.** Dispositif d'assistance à la conduite selon l'une quelconque des revendications 1 à 4, comportant :

un moyen de calcul de position d'objet (2) pour calculer la position d'un objet situé devant le véhicule, dans lequel le moyen de contrôle d'affichage affiche un indicateur d'objet indiquant la position de l'objet calculée par le moyen de calcul de position d'objet conjointement avec l'indicateur d'arrivée indiquant la position finale sur le moyen d'affichage.

**6.** Dispositif d'assistance à la conduite selon l'une quelconque des revendications 1 à 5, comportant :

un moyen de calcul de position d'objet (2) pour calculer la position d'un objet situé devant le véhicule ; et
un moyen de conversion (2) pour convertir la position calculée par le moyen de calcul de position finale à une valeur en fonction de la position de l'objet calculée par le moyen de calcul de position d'objet ;
dans lequel le moyen de contrôle d'affichage affiche la valeur convertie par le moyen de conversion en tant qu'indicateur d'arrivée par le moyen d'affichage.

**7.** Procédé d'assistance la conduite pour un véhicule, comportant les étapes consistant à :

calculer une position à laquelle une vitesse de véhicule devient une vitesse prédéterminée en fonction d'un ralentissement ; et
afficher la position en tant qu'indicateur d'arrivée sur une carte routière par un moyen d'affichage (6).

## Fig. 1

CPU  RAM  ROM
2  3  4

Assist display  Input/output interface
6  5

Front detection radar device  Vehicle ECU  Navigation apparatus
11  12  13

## Fig. 2

Cx (P)

Ln

11

C

Fig. 3

Fig. 4

Fig. 5

START

Obtain various signals — S1

Determine object — S2

Start driving assist for braking? — S3 — NO

YES

Calculate final position SP — S4

Display driving assist image for breaking — S5

Obtain various signals — S6

Terminate the driving assist for braking? — S7 — NO

YES

Terminate the display of the driving assist image for braking — S8

Ignition switch is turned off? — S9 — NO

YES

END

Fig. 6

Fig. 7

Fig. 8

Fig. 9

Fig. 10

BG

+

41

0

40

−

Fig. 11

BG

+

0

40

42

−

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0208010 A
- FR 2842337
- JP 2002163795 A